# EUROPEAN PATENT SPECIFICATION

(11) **EP 3 312 400 B1**
(45) Date of publication and mention of the grant of the patent: **20.11.2019**
(21) Application number: 16812002.0
(22) Date of filing: 20.06.2016
(51) Int. Cl.: F01N 3/20, F01N 5/02, F01N 9/00

(54) **LOW-PRESSURE SCR SYSTEM AND METHOD FOR CONTROLLING SAME**
NIEDERDRUCK-SCR-SYSTEM UND VERFAHREN ZUR STEUERUNG DAVON
SYSTÈME DE RÉDUCTION CATALYTIQUE SÉLECTIVE ET SON PROCÉDÉ DE COMMANDE

(30) Priority: 18.06.2015 KR 20150086723; 18.06.2015 KR 20150086744; 15.07.2015 KR 20150100658; 17.06.2016 KR 20160075491
(43) Date of publication of application: 25.04.2018
(73) Proprietor: Hyundai Heavy Industries Co., Ltd., Ulsan 682-792 (KR)
(72) Inventor: KIM, Dae Hee, Ulsan 44032 (KR); YANG, Hee Sung, Ulsan 44032 (KR); KIM, Kyu Jong, Ulsan 44032 (KR); KIM, Keon Ho, Ulsan 44032 (KR); KIM, Jung Rae, Ulsan 44032 (KR); HAN, Ju Seog, Ulsan 44032 (KR)
(74) Representative: Jaeger, Michael David
(86) International application number: PCT/KR2016/006516
(87) International publication number: WO 2016/204589

(56) References cited:
- EP-A2- 2 280 155
- JP-A- 2013 130 072
- KR-A- 20140 000 556
- KR-A- 20140 094 645
- KR-A- 20160 006 515
- US-A1- 2014 223 902

## Description

### [Technical Field]

This disclosure relates to a SCR system and a control method thereof, and more particularly, to a low-pressure SCR system in which a SCR reactor is installed at a downstream of an engine turbocharger and a control method thereof.

### [Background Art]

Generally, an exhaust gas discharged after combustion in an engine of a ship, a vehicle, a power plant or the like contains many suspended particulates, nitrogen oxide NOx, and sulfur oxide SOx.

Thus, an exhaust line of the engine is equipped with a diesel particulate filter (DPF), a selective catalytic reduction (SCR) system, a scrubber (SCRubber, SOx removal) or the like to remove harmful substances in the exhaust gas. KR10-2014-0000556A shows a marine power unit including a selective catalytic reduction system.

Among them, the SCR system allows nitrogen oxides (NOx) in the exhaust gas to chemically react with a reducing agent such as ammonia (NH₃) and urea in the catalyst layer to decompose into harmless water and nitrogen and then discharges the water and nitrogen.

Here, the SCR catalyst is composed of a porous catalyst filter formed by extrusion or metallic coating, and one or several SCR catalysts are continuously installed in the SCR reactor installed at the exhaust line.

Generally, a SCR system of the engine for a ship requires high temperature of about 250°C or above, which is SCR reaction temperature, for prevention of ABS (ammonium bisulfate: NH₄HSO₄) formation, decomposition and removal of nitrogen oxide (NOx). Accordingly, the temperature of the exhaust gas is increased by engine tuning, or the SCR reactor is installed at an upstream of the engine turbocharger where the exhaust gas has high temperature.

If the SCR reactor is installed at an upstream of the turbocharger, it is called a 'high-pressure SCR system' because the exhaust gas flowing into the SCR reactor has high pressure and high temperature.

However, if the SCR reactor is installed at the upstream of the turbocharger, the SCR reactor should be installed very close to the engine. In this case, it is difficult to dispose the SCR system due to the narrow engine room, and the layout design of peripheral equipment and piping is restricted.

To solve this problem, in some cases, the SCR reactor is installed at a downstream of the turbocharger. If the SCR reactor is installed at the downstream of the turbocharger, it is called a 'low-pressure SCR system' because the exhaust gas flowing into the SCR reactor has low pressure and low temperature.

If the SCR system is installed at the downstream of the turbocharger, the SCR system may be installed outside the engine room. Thus, the SCR system may be freely disposed without any space constraints, and at the same time, the layout of the engine room may be freely designed.

However, in the low-pressure SCR system, the exhaust gas entering the SCR reactor has lower temperature than the normal SCR reaction temperature (or, catalytic activation temperature) since the exhaust gas loses heat in advance while passing through the turbocharger. In this way, it is difficult to obtain effective NOx removal performance due to the low temperature of the exhaust gas flowing into the SCR reactor, and problems such as catalyst poisoning and degradation of reducing agent decomposition performance occur together.

In order to solve this problem, in some cases, a separate heating device is additionally installed to the exhaust line at an inlet of the SCR reactor. The exhaust gas flowing into the SCR reactor is heated to the normal SCR reaction temperature by using the heating device. If heat is supplied using the heating device, the fuel consumption is increased, the thermal efficiency of the entire system is lowered, and the energy is wasted more.

If the SCR system is installed at the upstream of the turbocharger, the temperature of the exhaust gas flowing into the SCR reactor is kept higher than the normal SCR reaction temperature, so that the reducing agent is smoothly decomposed.

However, if the SCR system is installed at the downstream of the turbocharger, the temperature of the exhaust gas flowing into the SCR reactor is lower than the normal SCR reaction temperature, resulting in less decomposition of the reducing agent. Accordingly, instead of injecting a reducing agent such as urea near the inlet of the SCR reactor, a urea decomposing device should be used to decompose the reducing agent in advance. In other words, ammonia generated by urea decomposition is injected near the inlet of the SCR reactor.

The urea decomposing device also needs proper urea decomposition temperature. However, if the heat source for decomposition is supplied using the heating device, much fuel is inevitably consumed.

In addition, the temperature of flame generated when the fuel is burned in the heating portion (for example, a heating chamber) of the urea decomposing device is as high as about 1500°C. For this reason, a cooling device is additionally required to lower the temperature of the heating gas receiving the flame temperature as it is to the proper temperature before the heating gas is introduced into the urea decomposition chamber. If the cooling system is added, the system becomes complicated, and operating costs are increased. In addition, as the cooling device is further operated, the efficiency of the entire system is lowered, energy is wasted, and operation cost is increased. Nevertheless, it is not guaranteed that the temperature of the urea decomposition chamber is precisely controlled to an appropriate level.

### [Disclosure]

### [Technical Problem]

The present disclosure is proposed to solve the above-mentioned problems of a low-pressure SCR system in which a SCR reactor is installed at a downstream of a turbocharger.

The present disclosure is directed to allowing a portion of an exhaust gas emitting from an engine to bypass a turbocharger to be utilized as a temperature control gas of a urea decomposing device and as a heat source for increasing the temperature of the exhaust gas flowing into a SCR reactor above the normal SCR reaction temperature so. This provides a heat source required for heating the exhaust gas flowing into the SCR reactor (or, a heat source required for cooling the urea decomposing device) without any additional energy supply. Thus, the present disclosure is directed to providing a low-pressure SCR system which has reduced energy consumption and improved overall thermal efficiency, and a control method thereof.

The present disclosure is also directed to providing a low-pressure SCR system, which may be effectively and precisely controlled according to the temperature of the SCR reactor and the temperature of the urea decomposing device, when the exhaust gas extracted before entering the turbocharger is used as two kinds of heat sources for heating the SCR reactor and controlling the temperature of the urea decomposing device, and a control method thereof.

The present disclosure is also directed to providing a low-pressure SCR system, which may have an optimized size without being excessively enlarged, by introducing a bypass gas supplied to the urea decomposing device in a suitable level without an excessive flux when the bypass gas is supplied to the urea decomposing device and utilized as a heat source for urea decomposition, and a control method thereof.

The technical object of the present disclosure is not limited to the above, and other technical objects not mentioned herein will be clearly understood by those skilled in the art from the following description.

### [Technical Solution]

In one aspect of the present disclosure, there is provided a low-pressure SCR system, comprising: a SCR reactor 30; an exhaust line 11 configured to guide a low-temperature exhaust gas passing through a turbocharger 20 to the SCR reactor 30; a urea decomposing device 40 having a urea decomposition chamber 41 and configured to decompose urea to generate ammonia and send the generated ammonia to the SCR reactor 30; a first bypass line 13 configured to extract a portion of a high-temperature exhaust gas before flowing from an engine into the turbocharger 20 and guide the portion of the high-temperature exhaust gas to the urea decomposing device 40; a second bypass line 14 configured to connect the first bypass line 13 and the exhaust line 11 to distribute the high-temperature exhaust gas flowing in the first bypass line 13 to the exhaust line 11 so that a flux of the bypass gas supplied to the urea decomposing device 40 through the first bypass line 13 is changed; a third bypass line 16 configured to connect the exhaust line 11 and the first bypass line 13 to have a diverging point P3 in the exhaust line 11 at an upstream of a joining point P2 of the second bypass line 14 and have a joining point P4 in the first bypass line 13 at a downstream of a diverging point P1 of the second bypass line 14, the third bypass line 16 extracting a portion of the low-temperature exhaust gas flowing in the exhaust line 11 through the turbocharger 20 and supplying the portion of the low-temperature exhaust gas to the urea decomposing device 40 as an additional gas for cooling a heating gas for urea decomposition; and a control portion 60 configured to control overall SCR operations, including the control of fluxes in the first, second and third bypass lines 13, 14, 16 according to temperature of the SCR reactor 30 and temperature of the heating gas of the urea decomposing device 40.

In an embodiment, a distribution ratio of the flux of the bypass gas between the first bypass line 13 and the second bypass line 14 may be set according to temperature of the exhaust gas at an inlet of the SCR reactor 30.

In an embodiment, when the temperature of the exhaust gas at the inlet of the SCR reactor 30 is lower than SCR target temperature, the supply of the additional gas through the third bypass line 16 may be blocked, the flux of the bypass gas supplied to the urea decomposing device 40 through the first bypass line 13 may be increased, and the flux of the bypass gas flowing out to the exhaust line 11 through the second bypass line 14 may be reduced.

In an embodiment, as the flux of the bypass gas supplied to the urea decomposing device 40 is increased, a volume of fuel flowing into the urea decomposing device 40 may also be increased.

In an embodiment, the additional gas for cooling the urea decomposing device 40 may be supplied through the third bypass line 16 when the temperature of the heating gas of the urea decomposing device 40 is higher than target temperature, under the condition that the temperature of the exhaust gas at the inlet of the SCR reactor 30 is lower than the SCR target temperature and a distribution ratio is set to block the second bypass line 14 so that the high-temperature bypass gas entirely flows into the urea decomposing device 40 through the first bypass line 13.

In an embodiment, the additional gas for cooling the urea decomposing device 40, supplied through the third bypass line 16, may be gradually increased until the temperature of the heating gas of the urea decomposing device 40 is lowered to the target temperature.

In an embodiment, the low-pressure SCR system may further comprises a blower 50 installed at the third bypass line 16 to forcibly add the exhaust gas flowing in the exhaust line 11; and a third bypass flux adjusting valve 67 installed at the third bypass line 16 to adjust a flux of the additional gas sent to the urea decomposing device 40 by the blower 50.

In another aspect of the present disclosure, there is also provided a method for controlling a low-pressure SCR system, comprising: determining temperature of an exhaust gas at an inlet of a SCR reactor 30; setting a distribution ratio of a high-temperature bypass gas, extracted before flowing into a turbocharger 20, between a first bypass line 13 connected to a urea decomposing device 40 and a second bypass line 14 connected to an exhaust gas line 11 at an upstream of the SCR reactor 30, according to the determination result; adjusting a flux of a bypass gas supplied to the urea decomposing device 40 and a flux of a bypass gas discharged to the SCR reactor 30 by adjusting opening degrees of the first bypass line 13 and the second bypass line 14, according to the set distribution ratio; and determining whether or not to supply an additional gas for cooling the urea decomposing device 40 through a third bypass line 16 according to temperature of a heating gas of the urea decomposing device 40 and adjusting a flux thereof.

In the method for controlling a low-pressure SCR system according to an embodiment, when the temperature of the exhaust gas at the inlet of the SCR reactor 30 is lower than SCR target temperature, the supply of the additional gas for cooling through the third bypass line 16 may be blocked, a flux of the bypass gas discharged to the exhaust line 11 through the second bypass line 14 may be reduced, and a flux of the bypass gas supplied to the urea decomposing device 40 through the first bypass line 13 may be increased.

In the method for controlling a low-pressure SCR system according to an embodiment, as the flux of the bypass gas supplied to the urea decomposing device 40 through the first bypass line 13 is increased, a volume of fuel flowing into the urea decomposing device 40 may be increased correspondingly.

In an embodiment, when the temperature of the heating gas of the urea decomposing device 40 is higher than urea decomposition target temperature, the third bypass line 16 may be opened so that a low-temperature exhaust gas flowing through the turbocharger 20 is supplied as the additional gas for cooling.

In an embodiment, under the condition that the temperature of the exhaust gas at the inlet of the SCR reactor 30 is lower than SCR target temperature and a distribution ratio is set to block the second bypass line 14 and open the first bypass line 13 so that the high-temperature bypass gas emitting from an engine flows into the urea decomposing device 40 through the first bypass line 13, when the temperature of the heating gas of the urea decomposing device 40 is higher than target temperature, the third bypass line 16 may be opened to additionally extract a portion of the low-temperature exhaust gas passing through the exhaust line 11 so that the extracted portion of the low-temperature exhaust gas joins the high-temperature bypass gas entering the urea decomposing device 40 through the first bypass line 13.

### [Advantageous Effects]

If the low-pressure SCR system according to an embodiment of the present disclosure and the control method thereof are used, it is possible to reduce fuel consumption and improve the overall thermal efficiency of the system by utilizing a bypass gas as a heat source for heating the SCR reactor, a heat source for urea decomposition and a heat source for cooling the urea decomposing device.

In addition, if the low-pressure SCR system according to an embodiment of the present disclosure and the control method thereof are used, it is possible to provide effective and precise control by suitably distributing the exhaust gas, extracted before entering the turbocharger, to each bypass line according to the temperature of the SCR reactor and the temperature of the urea decomposing device when the exhaust gas is utilized as two types of heat sources for heating the SCR reactor and controlling the temperature of the urea decomposing device.

Moreover, if the low-pressure SCR system according to an embodiment of the present disclosure and the control method thereof are used, the urea decomposing device may be optimized to have a relatively small size by suitably distributing the bypass gas to each bypass line so that the bypass gas supplied to the urea decomposing device may flow at an appropriate level without any excessive flux, when the bypass gas is supplied to the urea decomposing device and utilized as a heat source for urea decomposition.

### [Description of Drawings]

FIG. 1 is a diagram showing a low-pressure SCR system according to the first embodiment of the present disclosure.
FIG. 2 is a diagram showing the flow of an exhaust gas and a bypass gas when the low-pressure SCR system according to the first embodiment of the present disclosure is controlled.
FIG. 3 is a diagram for illustrating a controlling process of the low-pressure SCR system according to the first embodiment of the present disclosure.
FIG. 4 is a diagram showing a low-pressure SCR system according to the second embodiment of the present disclosure.
FIG. 5 is a diagram showing the flow of an exhaust gas and a bypass gas when the low-pressure SCR system according to the second embodiment of the present disclosure is controlled.
FIG. 6 is a table comparatively showing simulation results of a bypass gas flux depending on whether a flux of the bypass gas is adjustable or not.
FIG. 7 is a table comparatively showing a flux of a third bypass gas depending on whether a flux of a third bypass line is adjustable.
FIG. 8 is a table comparatively showing a supply amount of the third bypass gas depending on whither a flux of the third bypass line is adjustable.
FIG. 9 is a diagram comparatively showing three kinds of cases of the third bypass line.
FIG. 10 is a graph comparatively showing response characteristics of Case 2 and Case 3 of FIG. 9.
FIG. 11 is a diagram for illustrating a low-pressure SCR system according to the third embodiment of the present disclosure.
FIG. 12 is a graph comparatively showing an amount of an additional gas for cooling depending on a location of a diverging point of the third bypass line.
FIG. 13 is a diagram showing a low-pressure SCR system according to the fourth embodiment of the present disclosure.
FIG. 14 is a diagram showing the flow of an exhaust gas and a bypass gas when the low-pressure SCR system according to the fourth embodiment of the present disclosure is controlled.
FIG. 15 is a diagram for illustrating a controlling process of the low-pressure SCR system according to the fourth embodiment of the present disclosure.

### [Best Mode]

Hereinafter, a low-pressure SCR system according to an embodiment of the present disclosure and a control method thereof will be described in detail with reference to the accompanying drawings. In the following description and claims, the term 'SCR target temperature' is a lower limit of a temperature range in which a catalytic reaction for removing nitrogen oxide is normally induced in a SCR reactor. Thus, the temperature of an exhaust gas flowing into the SCR reactor should be maintained above the 'SCR target temperature'. For example, if the temperature range in which the catalytic reaction is normally induced is 250 to 400°C, the SCR target temperature is 250°C, which is a lower limit of the above temperature range.

Also, the term 'target temperature of a heating gas' is temperature or a temperature range which a heating gas for urea decomposition, which enters a urea decomposition chamber, should have. In other words, when the heating gas maintains the 'target temperature of the heating gas', the urea decomposition temperature is maintained optimally in the urea decomposition chamber and the urea decomposition is normally performed. The urea decomposition target temperature is an optimum atmosphere in which a urea aqueous solution is decomposed into ammonia and carbon dioxide in the urea decomposition chamber. If the temperature of the heating gas flowing into the urea decomposition chamber is higher than the urea decomposition target temperature, an ammonia oxidation rate is increased. If the temperature is lower than the urea decomposition target temperature, the residence time for decomposition into ammonia is increased, and thus the urea decomposition chamber should have a great size.

The target temperature of the heating gas may be set to, for example, 500°C. Also, when the target temperature of the heating gas is maintained at 500°C, the aim is that, if urea is injected into the urea decomposition chamber, the temperature of an ammonia-containing heating gas flowing out of the urea decomposition chamber due to an endothermic reaction during the urea decomposition and entering an inlet of the SCR reactor is maintained at about 300 to 400°C.

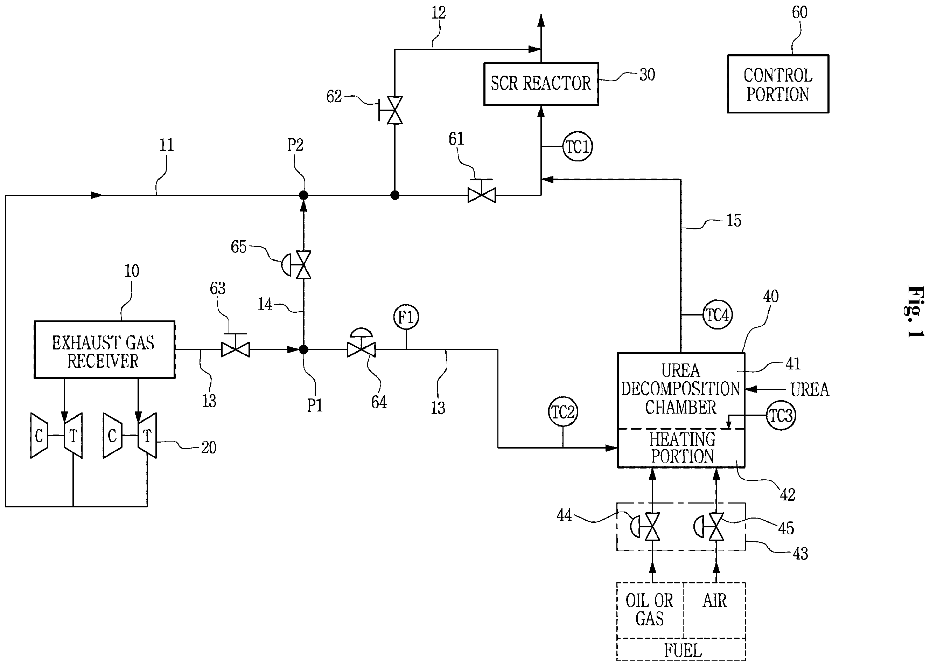

FIG. 1 is a diagram showing a low-pressure SCR system according to the first embodiment of the present disclosure.

Referring to FIG. 1, a low-pressure SCR system according to the first embodiment of the present disclosure includes an exhaust gas receiver 10, a turbocharger 20, a SCR reactor 30, a urea decomposing device 40, a control portion 60, an exhaust line 11, a SCR bypass line 12, a first bypass line 13, a second bypass line 14 and an ammonia injection line 15.

In FIG. 1, the exhaust gas receiver 10 collects exhaust gas discharged from each cylinder of an engine (not shown) and sends the collected exhaust gas to the turbocharger 20.

The exhaust gas generated from the engine is supplied to the turbocharger 20 through the exhaust gas receiver 10, drives a turbine T of the turbocharger 20, and then is exhausted through the exhaust line 11.

The exhaust gas discharged through the exhaust line 11 enters the SCR reactor 30 or is discharged to a road through the SCR bypass line 12 without passing through the SCR reactor 30.

The selection of the exhaust line 11 and the SCR bypass line 12 is performed by selectively opening and closing a valve 61 and a valve 62 installed at each line. For the operation to remove nitrogen oxides in the exhaust gas, namely, for the SCR operation, the valve 62 is closed and the valve 61 is opened.

At the inlet of the SCR reactor 30, the ammonia-containing heating gas generated at the urea decomposing device 40 is introduced together with the exhaust gas flowing from the turbocharger 20 and passes through a catalyst layer in the SCR reactor 30 to remove nitrogen oxide in the exhaust gas.

A temperature detection unit TC1 measures the temperature of the exhaust gas at the inlet of the SCR reactor 30 and applies the measured temperature to the control portion 60. The temperature detection unit TC1 may be installed at the inlet of the SCR reactor 30 or inside the SCR reactor 30.

The urea decomposing device 40 decomposes urea to produce ammonia serving as a reducing agent and includes a urea decomposition chamber 41 for providing a space where the urea decomposition reaction takes place and a heating portion 42 for heating the urea decomposition chamber 41.

The heating portion 42 may be a burner. The heating portion 42 produces a heating gas that provides urea decomposition heat by burning a fuel by means of the burner in the heating portion 42. The fuel is composed of oil or gas and air. The oil or gas and the air may be provided through a single supply line or through separate lines. The flux of the fuel supplied to the heating portion 42 is adjusted by controlling an opening degree of a fuel volume control valve 43 by the control portion 60. If the oil or gas and the air are provided through separate lines, a flux control valve 44 and a flux control valve 45 respectively installed at the lines are controlled.

The heating gas generated by the combustion of fuel in the heating portion 42 flows into the urea decomposition chamber 41 and becomes a heat source for decomposing the urea injected into the urea decomposition chamber 41.

In the urea decomposition chamber 41, the heating gas coexists with the decomposed ammonia. The ammonia-containing heating gas is supplied to the exhaust line 11 adjacent to the inlet of the SCR reactor 30 through the ammonia injection line 15 and mixed with the exhaust gas flowing through the exhaust line 11 to enter the SCR reactor 30.

A temperature detection unit TC3 measures the temperature of the heating gas flowing into the urea decomposition chamber 41 at the heating portion 42 and transmits the measured temperature value to the control portion 60.

The exhaust line 15 guides the exhaust gas passing through the turbocharger 20 toward the SCR reactor 30.

The first bypass line 13 extracts a portion of the exhaust gas before the high-temperature exhaust gas discharged from the engine enters the turbocharger 20, namely at an upstream of the turbocharger 20, and supplies the portion of the exhaust gas to the urea decomposing device 40. A valve 63 opens or closes the first bypass line 13. During normal operation, the valve 63 is always opened. A first bypass flux adjusting valve 64 adjusts the flux of the bypass gas entering the urea decomposing device 40 through the first bypass line 13 under the control of the control portion 60.

The bypass gas supplied to the urea decomposing device 40 through the first bypass line 13 flows into the heating portion 42 to control the temperature of the heating gas by the flame of the burner (for example, temperature 1000 to 1500°C) (namely, cooled to target temperature appropriate for urea decomposition (for example, 500°C) or heated to the target temperature faster just with less fuel). Also, after the urea decomposition, the ammonia-containing heating gas is supplied to the inlet of the SCR reactor 30 through the ammonia injection line 15 and mixed with the exhaust gas to increase the temperature of the exhaust gas at the inlet of the SCR reactor 30.

The second bypass line 14 is connected between the first bypass line 13 and the exhaust line 11. The second bypass line 14 is diverged at a diverging point P1 of the first bypass line 13 and is connected to the exhaust line 11 at a joining point P2.

Thus, the bypass gas prepared by extracting a portion of the high-temperature exhaust gas before entering the turbocharger 20 in the engine is distributed into a bypass gas flux supplied to the urea decomposing device 40 through the first bypass line 13 and a bypass gas flux supplied to the exhaust line 11 through the second bypass line 14.

The exhaust gas discharged from the engine has high temperature (for example, 300°C to 450°C), while the exhaust gas passing through the turbocharger 20 has relatively low temperature (for example, about 230°C).

In the low-pressure SCR system, since the SCR reactor 30 is installed at the downstream of the turbocharger 20, the temperature of the exhaust gas flowing through the turbocharger 20 and flowing into the SCR reactor 30 through the exhaust line 11 is inevitably low.

Thus, for the SCR operation (the nitrogen oxide removing operation), the temperature of the SCR reactor 30 should be increased to the SCR target temperature (for example, 250°C) by the bypass gas. Instead of raising the temperature of the SCR reactor 30 to the target temperature by sending all of the high-temperature bypass gas, which should be extracted for the SCR operation, to the exhaust line 11, a portion of the bypass gas is supplied to the urea decomposing device 40 and used as a cooling source and a heat source for controlling the temperature of the heating gas, thereby improving the thermal efficiency of the urea decomposing device 40 and saving the fuel. In particular, since the ammonia-containing heating gas maintains a high temperature (for example, 300 to 400°C) after decomposing urea in the urea decomposing device 40, the original role of 'increasing the temperature of the SCR reactor 30 to the target temperature by using the high temperature of the bypass gas' may be performed together.

The first bypass line 13 is equipped with the first bypass flux adjusting valve 64, and the second bypass line 14 is equipped with the second bypass flux adjusting valve 65. If the opening degrees of the first bypass flux adjusting valve 64 and the second bypass flux adjusting valve 65 are controlled by the control portion 60, a distribution ratio of the bypass gas flux supplied to the urea decomposing device 40 through the first bypass line 13 and the bypass gas flux discharged to the exhaust line 11 through the second bypass line 14 is changed (adjusted).

The control portion 60 compares the temperature at the inlet of the SCR reactor 30 (in this specification, this expression means the temperature at the inside of the SCR reactor 30) transmitted through the temperature detection unit TC1, the temperature of the bypass gas transmitted through the temperature detection unit TC2, the temperature of the heating gas flowing into the urea decomposition chamber 41 transmitted through the temperature detection unit TC3, and the temperature of the ammonia-containing heating gas of the ammonia injection line 15 transmitted through a temperature detection unit TC4 to set a distribution ratio of the bypass gas of the first bypass line 13 and the second bypass line 14. The distribution ratios mentioned in the specification and claims are defined as including 0:100 or 100:0. In other words, this includes a case where the bypass gas flux entering the urea decomposing device 40 through the first bypass line 13 or the bypass gas flux discharged to the exhaust line 11 through the second bypass line 14 is blocked, so that all bypass gas is sent to the other side.

The control portion 60 may set the bypass gas distribution ratio of the first bypass line 13 and the second bypass line 14 according to the temperature of the exhaust gas at the inlet of the SCR reactor 30.

In addition, if the temperature of the exhaust gas at the inlet of the SCR reactor 30 is lower than the SCR target temperature, the control portion 60 may set the distribution ratio to increase the bypass gas flux supplied to the urea decomposing device 40 through the first bypass line 13.

In addition, if the temperature of the exhaust gas at the inlet of the SCR reactor 30 is lower than the SCR target temperature, the control portion 60 may increase the volume of fuel volume entering the urea decomposing device 40 and also set the distribution ratio to increase the bypass gas flux supplied to the urea decomposing device 40 through the first bypass line 13.

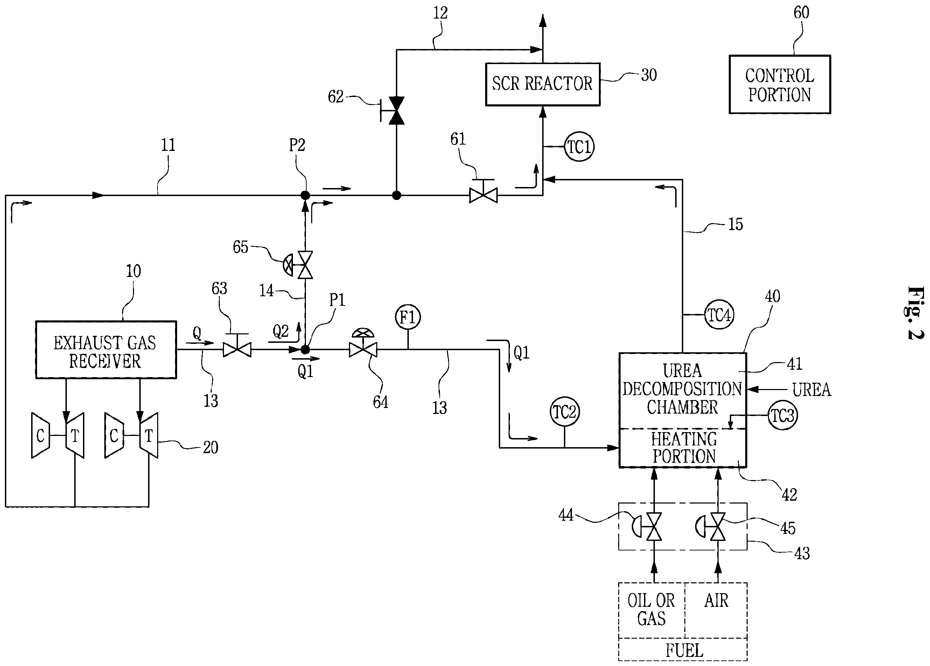

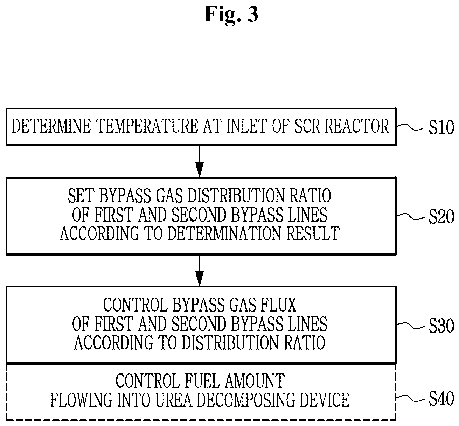

A process of controlling the low-pressure SCR system according to the first embodiment will be described with reference to FIGS. 2 and 3. FIG. 2 is a diagram showing the flow of the exhaust gas and the bypass gas, and FIG. 3 is a diagram for illustrating the controlling process.

During the SCR operation, the valve 62 is closed to allow the exhaust gas to enter the SCR reactor 30 through the exhaust line 11, so that the exhaust gas discharged from the turbocharger 20 to the exhaust line 11 is exhausted to a road after removing nitrogen oxide (NOx).

Also, the valve 63 is opened at all times to supply the bypass gas.

In addition, the distribution ratio of the first bypass line 13 and the second bypass line 14 is maintained at a standard value by controlling the opening degrees of the first bypass flux adjusting valve 64 and the second bypass flux adjusting valve 65 to a preset standard value (or, an initial operating value). Also, the opening degree of the fuel volume control valve 43 is controlled to a preset standard value (or, an initial operation value) to maintain the volume of fuel supplied to the urea decomposing device 40 at a standard value.

In this state, the control portion 60 determines the temperature of the exhaust gas at the inlet of the SCR reactor 30 in order to effectively decompose the urea heat the exhaust gas according to the temperature of the exhaust gas at the inlet of the SCR reactor 30 (S10). In other words, it is determined whether or not the temperature of the exhaust gas flowing into the SCR reactor 30 is higher than the 'SCR target temperature (for example, 250°C)' at which the catalytic reaction for removing nitrogen oxide is normally induced in the SCR reactor.

According to the determination result, the bypass gas distribution ratio of the first bypass line 13 and the second bypass line 14 is set (S20).

For example, if it is determined that the temperature of the exhaust gas is lower than the SCR target temperature, it is set so that the flux of the first bypass line 13 is increases in comparison to the second bypass line 14.

Then, the bypass gas fluxes of the first bypass line 13 and the second bypass line 14 are controlled according to the set distribution ratio (S30). The gas flux is controlled by increasing or decreasing the opening degree of the first bypass flux adjusting valve 64 and the second bypass flux adjusting valve 65.

For example, if the temperature of the exhaust gas at the inlet of the SCR reactor 30 is lower than the SCR target temperature, the opening degree of the second bypass flux adjusting valve 65 is decreased and the opening degree of the first bypass flux adjusting valve 64 is increased. If so, the bypass gas flux discharged to the exhaust line 11 through the second bypass line 14 is reduced and the bypass gas flux supplied to the urea decomposing device through the first bypass line 13 is increased.

In order to increase the temperature of the exhaust gas at the inlet of the SCR reactor 30 quickly and effectively, it is necessary to increase the volume of fuel flowing into the urea decomposing device 40 together with increasing the flux of the bypass gas entering the urea decomposing device 40 through the first bypass line 13 (S40).

If so, the flux and temperature of the heating gas are increased together, and as a result the flux and temperature of the ammonia-containing heating gas exiting the urea decomposition chamber 41 are increased, thereby increasing the temperature of the exhaust gas at the inlet of the SCR reactor 30 more rapidly.

At this time, the thermal capacity of the heating portion 42 is increased according to the increase of the fuel volume flowing into the urea decomposing device 40, and the temperature of the heating gas, which has been excessively increased due to the high flame temperature (for example, 1000 to 1500°C) generated by the combustion of the fuel, is lowered to the urea decomposition target temperature (for example, 500°C) due to the bypass gas supplied in large quantities through the first bypass line 13, rather than a cooling air provided by any other device. The flux of the bypass gas through the first bypass line 13 is gradually increased until the temperature of the heating gas reaches the target temperature.

Meanwhile, when the temperature of the exhaust gas at the inlet of the SCR reactor 30 reaches or is above the SCR target temperature, no additional heat supply is required to increase the temperature of the exhaust gas at the inlet of the SCR reactor 30, and the urea decomposition device 40 just needs the heat for the urea decomposition. Thus, the fuel volume supplied to the urea decomposing device 40 may be maintained at a minimum amount to provide only the heat for urea decomposition, and the bypass gas flux may be supplied through the first bypass line 13 at a minimum ratio required for lowering the temperature of the heating gas to the urea decomposition target temperature.

As described above, by substituting the cooling air required for increasing the temperature of the exhaust gas flowing into the SCR reactor 30 to the SCR target temperature, reducing the fuel volume necessary for the urea decomposition, and lowering the temperature of the heating gas for urea decomposition to the urea decomposition target temperature with the bypass gas, it is possible to improve the overall system efficiency and optimize the urea decomposing device 40 to a small size.

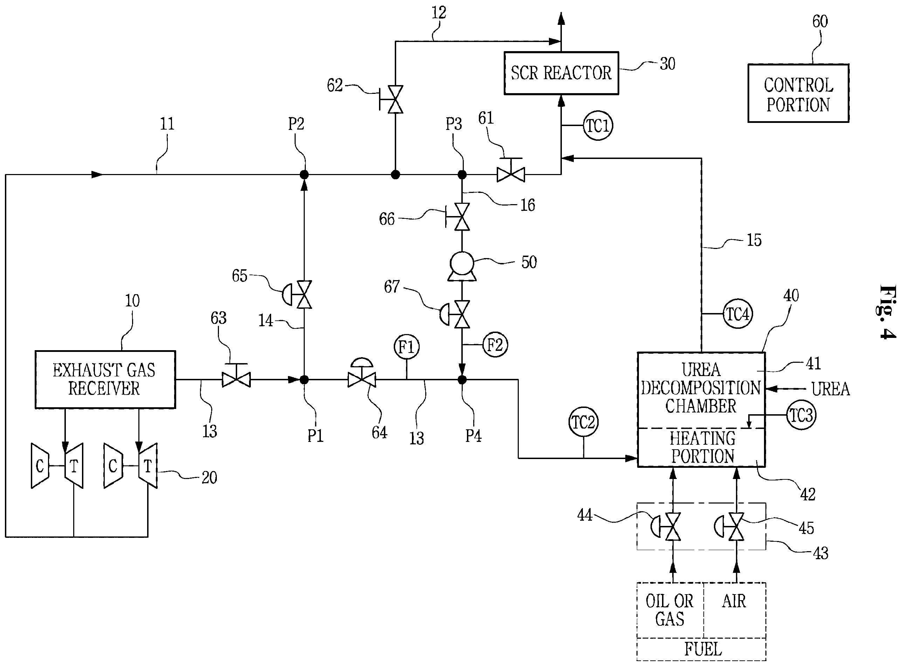

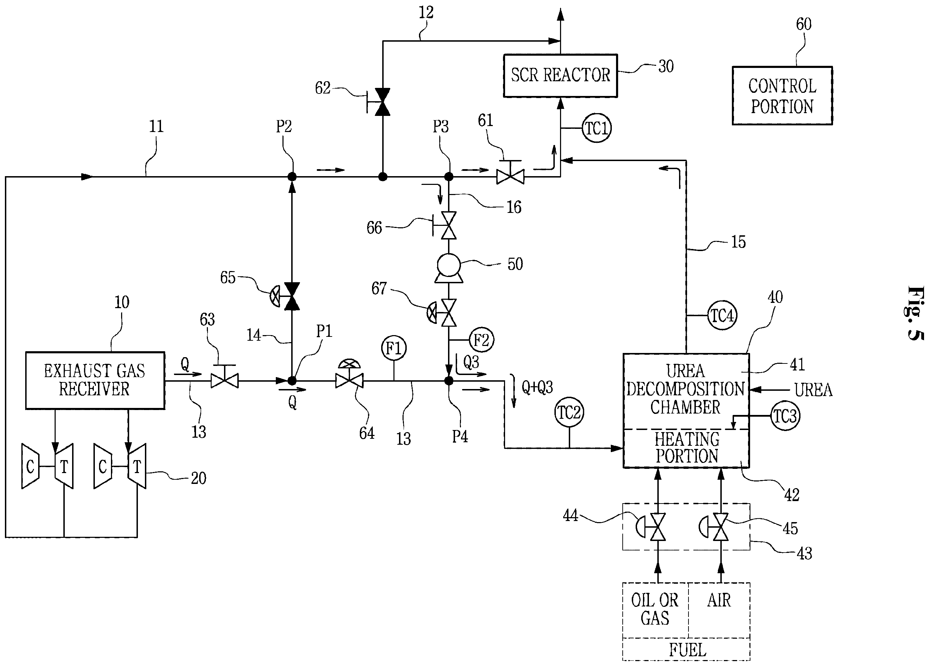

Next, FIGS. 4 and 5 are diagrams for illustrating a low-pressure SCR system according to the second embodiment of the present disclosure. FIG. 4 is a system diagram, and FIG. 5 is a diagram showing the flow of the exhaust gas and the bypass gas during the control process.

The second embodiment is substantially identical to the first embodiment, except that a third bypass line 16 for extracting a portion of the exhaust gas passing through the exhaust line 11 and supplying the portion of the exhaust gas to the urea decomposing device 40 is further included.

In this embodiment, the third bypass line 16 is diverged at a diverging point P3 of the exhaust line 11 and is connected to the first bypass line 13 at a joining point P4.

The 'additional gas' extracted from the exhaust line 11 through the third bypass line 16 joins the bypass gas entering the urea decomposing device 40 through the first bypass line 13.

A blower 50 for adding the exhaust gas flowing through the exhaust line 11 may be installed at the third bypass line 16. The exhaust gas flowing into the blower 50 is controlled by a valve 66, and the flux of the additional gas exiting the blower 50 is controlled by adjusting a third bypass flux adjusting valve 67 by the control portion 60.

The control portion 60 may control the flux of the additional gas flowing into the urea decomposing device 40 through the third bypass line 16 by adjusting a rotational speed of the blower 50.

The additional gas may be set to be supplied through the third bypass line 16 when the temperature of the heating gas flowing into the urea decomposition chamber 41 of the urea decomposing device 40 is higher than the target temperature, under the condition that the temperature of the exhaust gas at the inlet of the SCR reactor 30 is lower than the SCR target temperature and the distribution ratio is set so that the bypass gas entirely flows into the urea decomposing device 40 through the first bypass line 13 by closing the second bypass flux adjusting valve 65 and opening the first bypass flux adjusting valve 64 (see FIG. 5).

Since the exhaust gas passing through the turbocharger 20 and flowing through the exhaust line 11 has relatively low temperature (for example, about 230°C), the exhaust gas may be used as a cooling gas for lowering the temperature of the heating gas, which has received the high flame temperature of the heating portion 42, to the urea decomposition target temperature.

As described in the first embodiment, in order to quickly and effectively increase the temperature of the exhaust gas at the inlet of the SCR reactor 30, the fuel volume flowing into the urea decomposing device 40 may be controlled to be increased, together with increasing the flux of the bypass gas entering the urea decomposing device 40 through the first bypass line 13.

If so, the flux and temperature of the heating gas through the urea decomposing device 40 are increased together, and as a result, the flux and temperature of the ammonia-containing heating gas exiting the urea decomposition chamber 41 are increased, thereby increasing the temperature of the exhaust gas at the inlet of the SCR reactor 30 more rapidly.

At this time, the thermal capacity of the heating portion 42 is increased according to the increase of the fuel volume flowing into the urea decomposing device 40, and the temperature of the heating gas, which has been excessively increased due to the high flame temperature (for example, 1000 to 1500°C) generated due to the combustion of fuel, is lowered to the urea decomposition target temperature (for example, 500°C) by the bypass gas supplied in large quantities through the first bypass line 13. The flux of the bypass gas through the first bypass line 13 is gradually increased until the temperature of the heating gas reaches the target temperature.

However, under this operating situation, even if the bypass gas distribution ratio of the first bypass line 13 is increased to 100%, namely even if all the bypass gas flows into the urea decomposing device 40 through the first bypass line 13, the temperature of the heating gas increased by the flame of the heating portion 42 may not be lowered to the urea decomposition target temperature.

In this case, the temperature of the heating gas may be lowered to the urea decomposition target temperature by extracting a portion of the exhaust gas having a lower temperature from the exhaust line 11 through the third bypass line 16 and supplying the portion of the exhaust gas to the urea decomposing device 40 as an additional gas.

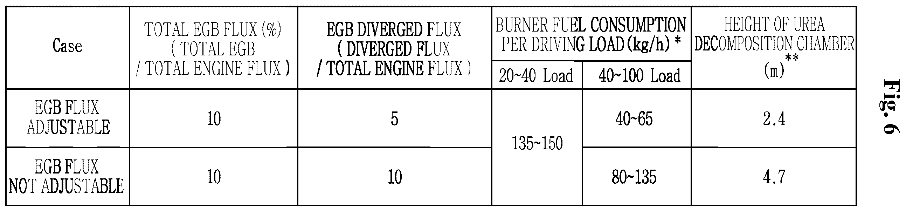

Next, FIGS. 6 to 10 show simulation results in relation to the energy saving effect, obtained by the first, second and third bypass lines 13, 14, 16 of the present disclosure and the adjustable flux of each line, the possibility of size reduction of the urea decomposition chamber 41, and response characteristics to the control of the third bypass line 16.

An engine used in the simulation is an 8-cylinder 2-stroke engine with a piston diameter of 95 cm, a maximum output 41.6 MW/75 rpm, and an engine displacement of 306,396 kg/h. The urea decomposition chamber 41 has a diameter of 1.5 m.

FIG. 6 is a table for comparing a case where the bypass gas flux flowing into the urea decomposing device 40 is not adjustable (a conventional case) and a case where the bypass gas flux flowing into the urea decomposing device 40 is adjustable by diverging the second bypass gas line 14 from the first bypass line 13 (the present disclosure). Also, the flux of the bypass gas (EGB) emitting from the engine to the first bypass line 13 is set to 10% of the total flux (displacement) of the engine. In addition, the urea decomposition target temperature of the urea decomposition chamber 41 is set to 500°C, and the fuel consumption of a burner of the urea decomposing device therefor is calculated.

Referring to FIG. 6, in the conventional case where the gas flux flowing into the urea decomposing device 40 is not adjustable, 10% of the bypass gas flux emitting from the engine always flows into the urea decomposing device 40, and based thereon, the fuel consumption of the burner increases from 80 to 135 kg/h in the engine load range of 40 to 100. In addition, in order to heat to the urea decomposition target temperature (500°C) by using 10% of the bypass gas flux entirely, the urea decomposition chamber 41 should have a height of about 4.7 m.

However, in the present disclosure, the second bypass line 14 is provided and the gas flux flowing into the urea decomposing device 40 through the first bypass line 13 may be optimally adjusted by controlling the first bypass flux adjusting valve 64, and thus the gas flux flowing into the urea decomposing device 40 may be reduced to 5% of the engine displacement. The remaining 5% is discharged to the exhaust line 11 through the second bypass line 14. Based thereon, in the engine load range of 40 to 100, the fuel consumption of the burner is reduced to the range of 40 to 65 kg/h. In addition, the urea decomposition chamber 41 may have a height of just about 2.4 m for heating to the urea decomposition target temperature (500°C) by using 5% of bypass gas flux entirely.

In the conventional technique, since it is impossible to adjust the gas flux flowing into the urea decomposing device 40, the gas flux entering the urea decomposing device 40 is set to a maximum value. Also, since it is necessary to secure an additional bypass gas flux to cope of the worst condition that the flux is insufficient, it is inevitable to design the bypass gas flux to be much more than an actually required flux. In the conventional technique, due to this reason, the fuel consumption of the burner is increased, and the size of the urea decomposition chamber 41 is also increased.

However, in the present disclosure, since the gas flux flowing into the urea decomposing device 40 is optimally adjusted by controlling the second bypass line 14 and the first bypass flux adjusting valve 64, it is not needed to secure an additional bypass gas flux excessively. Thus, the fuel consumption of the burner and the size of the urea decomposition chamber 41 may be reduced as much.

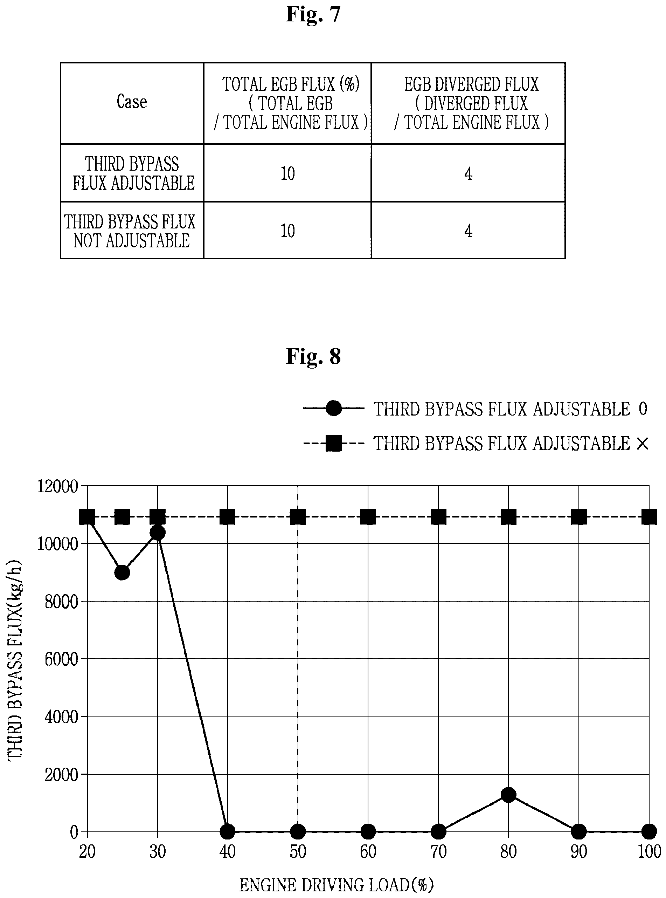

FIGS. 7 and 8 are diagrams for comparing a case where the flux of the third bypass line 16 is not adjustable and a case where the third bypass line 16 is provided and the flux of the additional gas for cooling is adjustable by the third bypass flux adjusting valve 67. FIG. 7 shows the third bypass gas flux, and FIG. 8 is a graph for comparing the supply amount of the third bypass gas flux according to the engine load.

Referring to FIG. 7, in both cases, a bypass gas (EGB) flux emitting from the engine to the first bypass line 13 is 10% of the total flux (displacement) of the engine, and the bypass gas flux flowing into the urea decomposing device 40 is set to be adjusted to 4% by controlling the first bypass flux adjusting valve 64.

Referring to FIG. 8, if the flux of the third bypass line 16 is not adjustable, an unnecessarily large amount of the third bypass gas (the bypass gas for cooling the urea decomposing device 40) is constantly supplied regardless of the engine load. In this case, the fuel consumption of the burner is increased and the size of the urea decomposition chamber 41 is also increased.

However, if the flux is adjustable by the third bypass flux adjusting valve 67, the amount of the third bypass gas may be adjusted optimally according to the engine load. Thus, the fuel consumption of the burner may be reduced and the size of the urea decomposition chamber 41 may also be reduced.

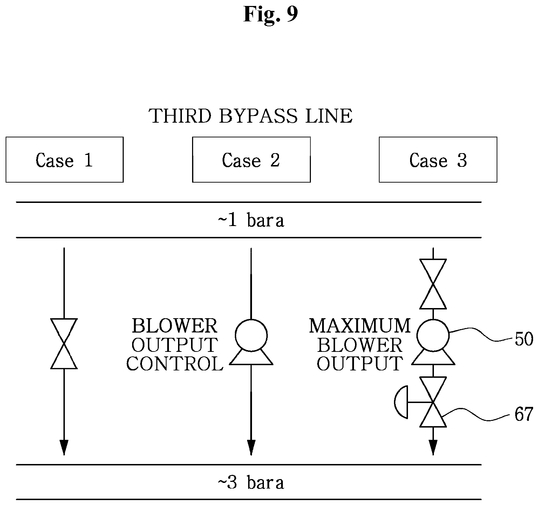

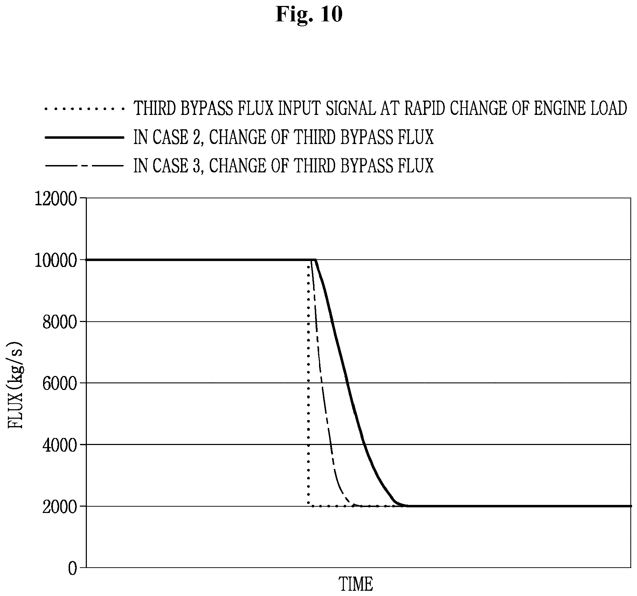

FIGS. 9 and 10 are diagrams for comparing the response characteristics when the third bypass line 16 has the blower 50 and the flux is adjustable by the third bypass flux adjusting valve 67. FIG. 9 comparatively shows three cases for the configuration of the third bypass line 16, and FIG. 10 is a graph for comparing the response characteristics of Case 2 and Case 3.

In FIG. 9, Case 1 is a case where the third bypass line 16 has only the valve or the flux adjusting valve, Case 2 is a case where the third bypass line 16 has only the blower 50, and Case 3 is a case where the third bypass line 16 has the blower 50 and the third bypass flux adjusting valve 67 together.

The exhaust gas having lowered pressure and temperature while passing through the turbocharger 20 flows in the exhaust line 11. In FIG. 9, the pressure of the exhaust line 11 is about 1 bara or below. The exhaust gas having high pressure and high temperature before passing through the turbocharger 20 flows in the first bypass line 13. In FIG. 9, the pressure of the first bypass line 13 is about 3 bara or below. For this reason, if only a valve or a flux adjusting valve is provided without a blower as in Case 1, it is very difficult to introduce the exhaust gas from the low-pressure exhaust line 11 to the high-pressure first bypass line 13.

In Case 2, a gas may be forcibly added from the low-pressure exhaust line 11 to the high-pressure first bypass line 13 by using the blower, but the flux should be controlled only by adjusting the output of the blower. Thus, as shown in FIG. 10, even if a flux change command is applied from the control portion 60 at a sudden change of the engine load, a lot of delay time is accompanied until the flux reaches a target flux.

However, in Case 3, the third bypass line 16 is equipped with the blower 50 and the third bypass flux adjusting valve 67 together. Thus, when the engine load is suddenly changed in a state where the blower 50 is operated with a maximum allowable load, the flux is adjusted by controlling the third bypass flux adjusting valve 67. For this reason, if a flux change command is applied from the control portion 60, the flux may be quickly adjusted to the target flux.

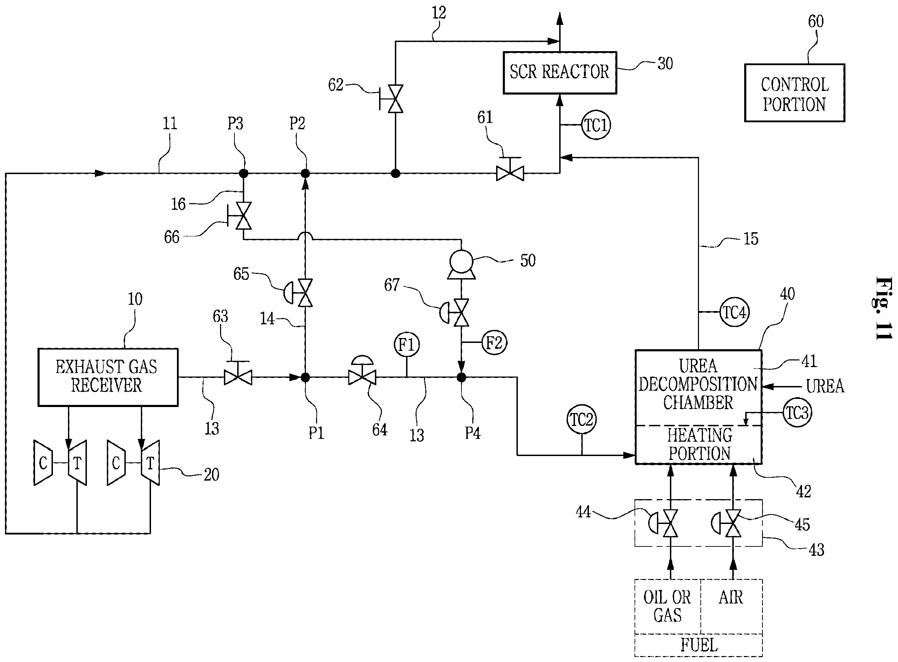

Next, FIG. 11 is a schematic diagram for illustrating a low-pressure SCR system according to the third embodiment of the present disclosure.

The third embodiment of FIG. 11 is substantially identical to the second embodiment, except for the diverging point P3 of the third bypass line 16. The same features as in the second embodiment will not be described in detail.

In the third embodiment of the present disclosure, the third bypass line 16 is diverged at the diverging point P3 of the exhaust line 11 and is connected to the first bypass line 13 at the joining point P4.

In other words, the diverging point P3 of the third bypass line 16 is located in the exhaust line 11 at an upstream of the joining point P2 of the second bypass line 14, and the joining point P4 of the third bypass line 16 is located in the bypass line 13 at a downstream of the diverging point P1 of the second bypass line 14.

According to the third embodiment of the present disclosure, the diverging point P3 of the third bypass line 16 is installed at an upstream of the joining point P2 of the second bypass line 14, so that the urea decomposition target temperature is researched by using an exhaust gas having a flux smaller than that of the second embodiment, and it is possible to optimize the urea decomposition chamber 41 and reduce the consumption energy of the blower 50 as much.

In short, if the diverging point P3 of the third bypass line 16 is located at the downstream of the joining point P2 of the second bypass line 14 as in the second embodiment depicted in FIG. 4, the high-temperature bypass gas is joined through the second bypass line 14 to add the exhaust gas with an increased temperature and supplied to the urea decomposing device 40. For this reason, the cooling effect of the urea decomposing device 40 is deteriorated.

However, if the diverging point P3 of the third bypass line 16 is installed at the upstream of the joining point P2 of the second bypass line 14 according to the third embodiment of the present disclosure, the low-temperature exhaust gas may be added before the high-temperature bypass gas is joined, and thus the amount of cooling gas required in the urea decomposing device 40 may be reduced as much.

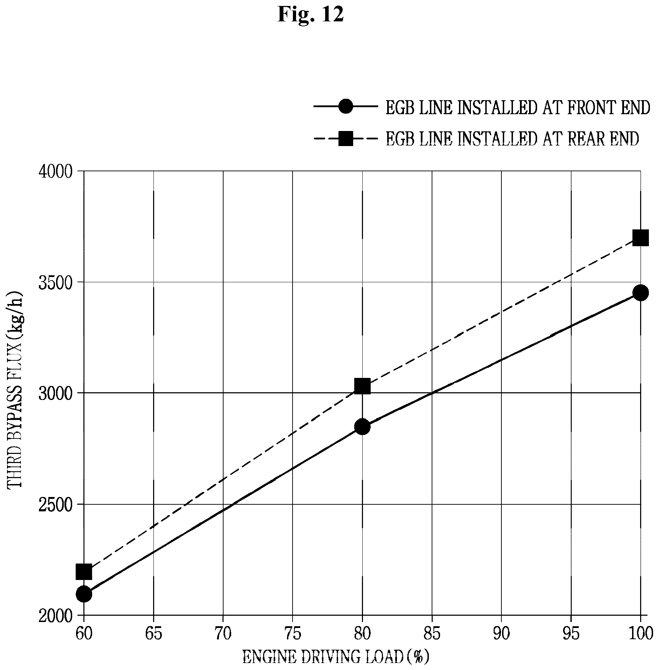

FIG. 12 is a graph comparatively showing the amount of additional cooling gas to be supplied to the urea decomposing device 40 through the third bypass line 16 in a case where the diverging point P3 of the third bypass line 16 is located at the downstream of the joining point P2 of the second bypass line 14 as in the second embodiment and in a case where the diverging point P3 of the third bypass line 16 is located at the upstream of the joining point P2 of the second bypass line 14 as in the third embodiment.

The engine used in the simulation is an 11-cylinder two-stroke engine with a piston diameter of 95 cm, a maximum output of 59.8 MW/78 rpm, and an engine displacement of 439,200 kg/h. The flux of the additional gas added to the urea decomposing device 40 is based on 2% of the total displacement.

Referring to FIG. 12, if the diverging point P3 of the third bypass line 16 is installed at the upstream of the joining point P2 of the second bypass line 14, it may be found that just an additional cooling gas of a smaller flux is required. Thus, the capacity of the blower 50 and the urea decomposition chamber 41 may be further minimized.

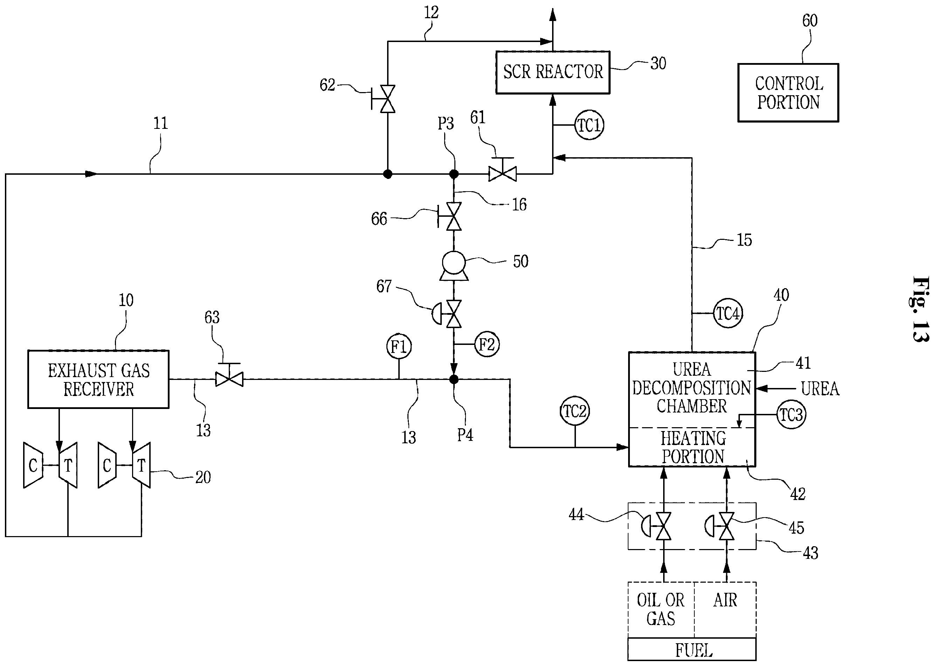

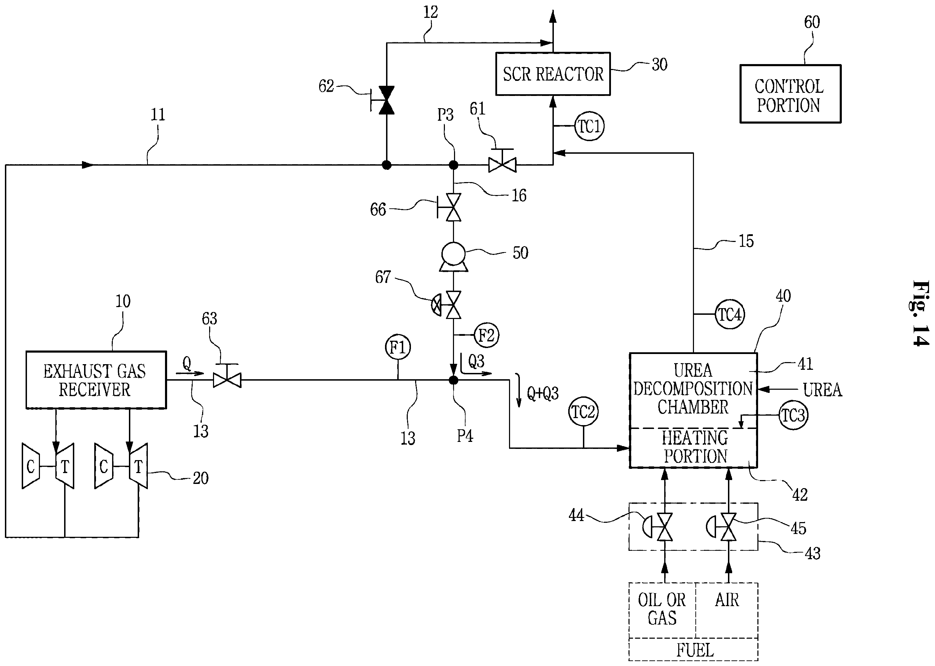

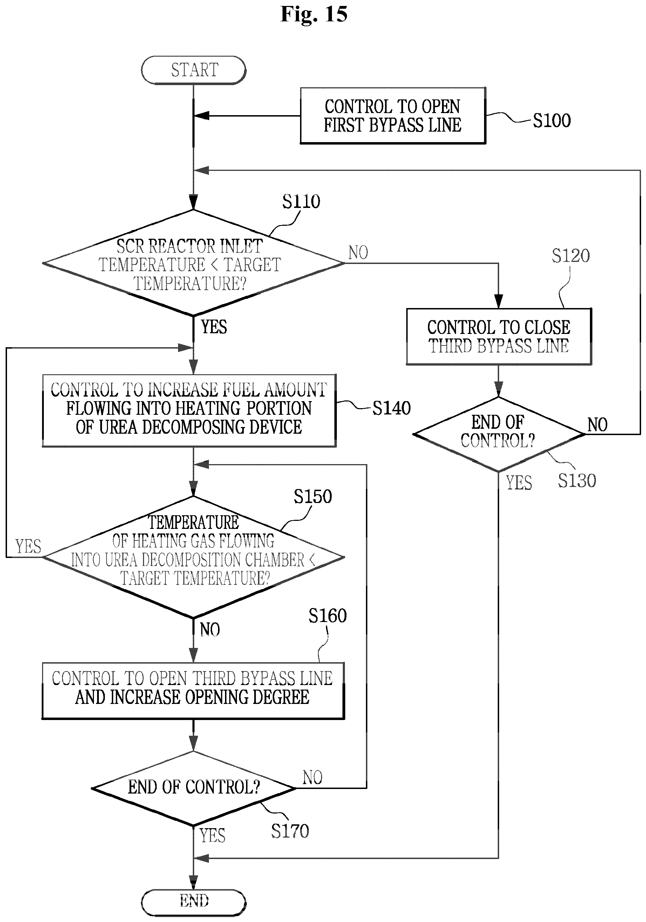

Next, FIGS. 13 to 15 are diagrams for illustrating a low-pressure SCR system according to the fourth embodiment of the present disclosure. FIG. 13 is a system diagram, and FIG. 14 shows the flow of the exhaust gas and the bypass gas during the controlling process, and FIG. 15 is a diagram for illustrating the controlling process.

In the low-pressure SCR system of the fourth embodiment depicted in FIGS. 13 to 15, the bypass gas line includes a first bypass line 13 for extracting a portion of the exhaust gas before flowing from the engine into the turbocharger 20 and guiding the portion of the exhaust gas to the urea decomposing device 40, and a third bypass line 16 diverged from the exhaust line 11 and connected to the first bypass line 13.

The third bypass line 16 supplies a portion of the exhaust gas emitting the turbocharger 20 and passing through the exhaust line 11 to the urea decomposing device 40 as an additional gas.

A valve 63 is installed at the first bypass line 13.

A blower 50 for adding the exhaust gas flowing through the exhaust line 11 may be installed at the third bypass line 16. The exhaust gas flowing into the blower 50 is controlled by the valve 66 and the flux of the additional gas exiting the blower 50 is controlled by adjusting the third bypass flux adjusting valve 67 by the control portion 60.

The control portion 60 may control the flux of the additional gas flowing into the urea decomposing device 40 through the third bypass line 16 by adjusting the rotational speed of the blower 50.

Here, the bypass gas prepared by extracting a portion of the exhaust gas emitting from the engine before entering the turbocharger 20 is entirely supplied to the urea decomposing device 40 through the first bypass line 13, and the bypass gas having an increased temperature (for example, 300 to 400°C) while passing through the urea decomposing device 40, namely the ammonia-containing heating gas, is supplied to the exhaust line 11 at the inlet of the SCR reactor 30, thereby increasing the temperature of the SCR reactor 30 to the SCR target temperature. Along with it, the bypass gas supplied through the first bypass line 13 also serves to lower the temperature of the heating gas of the urea decomposing device 40.

In addition, the temperature of the heating gas of the urea decomposing device 40 may be rapidly lowered to the urea decomposition target temperature by further extracting a portion of the exhaust gas having a low temperature from the exhaust line 11 through the third bypass line 16 and supplying the portion of the exhaust gas to the urea decomposing device 40 as an additional gas.

A ratio of the flux of the additional gas entering the urea decomposing device 40 through the third bypass line 16 to the flux of the bypass gas entering the urea decomposing device 40 through the first bypass line 13 is controlled by the control portion 60 to effectively lower the temperature of the heating gas generated at the heating portion 42 to the urea decomposition target temperature.

For example, if the temperature of the exhaust gas at the inlet of the SCR reactor 30 is lower than the SCR target temperature to increase the fuel flux flowing into the urea decomposing device 40 and thus increase the thermal capacity, the temperature of the heating gas is cooled not to exceed the target temperature due to the increased thermal capacity of the heating portion of the urea decomposing device 40, caused by the bypass gas flux supplied through the first bypass line 13 corresponding to the increase of the fuel flux. This control may be performed in a state where the supply of the exhaust gas through the third bypass line 16 is blocked.

However, if the temperature of the heating gas flowing into the urea decomposition chamber 41 of the urea decomposing device 40 exceeds the target temperature under the condition that the bypass gas is supplied in the maximum amount through the first bypass line 13, the third bypass line 16 may be opened so that the exhaust gas having a low temperature emitting from the turbocharger 20 and flowing through the exhaust line 11 is supplied as an additional gas to help the cooling operation.

FIG. 15 is a diagram for explaining the control process according to the fourth embodiment. FIG. 14 is also referred to. In addition, the control method of FIG. 15 may also be applied as a control method of the second and third embodiments of the present disclosure.

During the SCR operation, the valve 62 is closed to allow the exhaust gas to enter the SCR reactor 30 through the exhaust line 11 so that the exhaust gas discharged from the turbocharger 20 to the exhaust line 11 is exhausted to a road after removing nitrogen oxide (NOx).

In addition, the valve 63 is always opened to supply the bypass gas (S100). The valve 66 and third bypass flux adjusting valve 67 are closed to block the supply of the additional gas.

In this state, the control portion 60 determines the temperature of the exhaust gas at the inlet of the SCR reactor 30 in order to effectively perform urea decomposition and exhaust gas heating according to the temperature of the exhaust gas at the inlet of the SCR reactor 30 (S110). In other words, it is determined whether or not the temperature of the exhaust gas flowing into the SCR reactor 30 is higher than the 'SCR target temperature (for example, 250°C)' at which the catalytic reaction for removing nitrogen oxide is normally induced in the SCR reactor.

According to the determination result, it is determined whether to increase or decrease the fuel flux flowing into the urea decomposing device 40. According to the determination whether to increase or decrease the fuel flux, the flux of the bypass gas supplied to the urea decomposing device 40 through the first bypass line 13 and the flux of the additional gas extracted from the exhaust line 11 through the third bypass line 16 and supplied to the urea decomposing device 40 are adjusted.

Specifically, if the temperature of the exhaust gas at the inlet of the SCR reactor 30 is above the SCR target temperature, the supply of the exhaust gas through the third bypass line is blocked (S120). In other words, only the bypass gas is supplied to the urea decomposing device 40 through the first bypass line 13.

If the temperature of the exhaust gas at the inlet of the SCR reactor 30 is lower than the SCR target temperature, in a state where the supply of the exhaust gas through the third bypass line is blocked, the fuel flux flowing into the urea decomposing device 40 is increased (S140). By doing so, the temperature of the ammonia-containing heating gas supplied to the exhaust line 11 at the inlet of the SCR reactor 30 is increased.

In this control process, it is determined whether or not the temperature of the heating gas of the urea decomposing device 40 exceeds the urea decomposition target temperature (S150).

If the temperature of the heating gas of the urea decomposing device 40 exceeds the urea decomposition target temperature, the third bypass line 16 is opened to supply the low-temperature exhaust gas passing from the turbocharger 20 as an additional gas, thereby helping to cool the heating gas of the urea decomposing device 40.

The opening degree of the third bypass line 16 is increased until the temperature of the heating gas of the urea decomposing device 40 is lowered to the urea decomposition target temperature, thereby increasing the flux of the additional gas (S160).

The configuration of the low-pressure SCR system and its control method according to the present disclosure is not limited to the above embodiments but may be modified in various ways within the scope of the technical idea of the present disclosure.

## Claims

1. A low-pressure SCR system, comprising:
a SCR reactor (30);
an exhaust line (11) configured to guide a low-temperature exhaust gas passing through a turbocharger (20) to the SCR reactor (30);
a urea decomposing device (40) having a urea decomposition chamber (41) and configured to decompose urea to generate ammonia and send the generated ammonia to the SCR reactor (30);
a first bypass line (13) configured to extract a portion of a high-temperature exhaust gas before flowing from an engine into the turbocharger (20) and guide the portion of the high-temperature exhaust gas to the urea decomposing device (40);
a second bypass line (14) configured to connect the first bypass line (13) and the exhaust line (11) to distribute the high-temperature exhaust gas flowing in the first bypass line (13) to the exhaust line (11) so that a flux of the bypass gas supplied to the urea decomposing device (40) through the first bypass line (13) is changed;
**characterised in that** the system further comprises:
a third bypass line (16) configured to connect the exhaust line (11) and the first bypass line (13) to have a diverging point (P3) in the exhaust line (11) at an upstream of a joining point (P2) of the second bypass line (14) and have a joining point (P4) in the first bypass line (13) at a downstream of a diverging point (P1) of the second bypass line (14), the third bypass line (16) extracting a portion of the low-temperature exhaust gas flowing in the exhaust line (11) through the turbocharger (20) and supplying the portion of the low-temperature exhaust gas to the urea decomposing device (40) as an additional gas for cooling a heating gas for urea decomposition; and
a control portion (60) configured to control overall SCR operations, including the control of fluxes in the first, second and third bypass lines (13, 14, 16) according to temperature of the SCR reactor (30) and temperature of the heating gas of the urea decomposing device (40).

2. The low-pressure SCR system according to claim 1,
wherein a distribution ratio of the flux of the bypass gas between the first bypass line (13) and the second bypass line (14) is set according to temperature of the exhaust gas at an inlet of the SCR reactor (30).

3. The low-pressure SCR system according to claim 2,
wherein when the temperature of the exhaust gas at the inlet of the SCR reactor (30) is lower than SCR target temperature, the supply of the additional gas through the third bypass line (16) is blocked, the flux of the bypass gas supplied to the urea decomposing device (40) through the first bypass line (13) is increased, and the flux of the bypass gas flowing out to the exhaust line (11) through the second bypass line (14) is reduced.

4. The low-pressure SCR system according to claim 3,
wherein as the flux of the bypass gas supplied to the urea decomposing device (40) is increased, a volume of fuel flowing into the urea decomposing device (40) is also increased.

5. The low-pressure SCR system according to claim 1,
wherein the additional gas for cooling the urea decomposing device (40) is supplied through the third bypass line (16) when the temperature of the heating gas of the urea decomposing device (40) is higher than target temperature, under the condition that the temperature of the exhaust gas at the inlet of the SCR reactor (30) is lower than the SCR target temperature and a distribution ratio is set to block the second bypass line (14) so that the high-temperature bypass gas entirely flows into the urea decomposing device (40) through the first bypass line (13).

6. The low-pressure SCR system according to claim 5,
wherein the additional gas for cooling the urea decomposing device (40), supplied through the third bypass line (16), is gradually increased until the temperature of the heating gas of the urea decomposing device (40) is lowered to the target temperature.

7. The low-pressure SCR system according to claim 1, further comprising:
a blower (50) installed at the third bypass line (16) to forcibly add the exhaust gas flowing in the exhaust line (11); and
a third bypass flux adjusting valve (67) installed at the third bypass line (16) to adjust a flux of the additional gas sent to the urea decomposing device (40) by the blower (50).

8. A method for controlling a low-pressure SCR system, comprising:
determining temperature of an exhaust gas at an inlet of a SCR reactor (30);
setting a distribution ratio of a high-temperature bypass gas, extracted before flowing into a turbocharger (20), between a first bypass line (13) connected to a urea decomposing device (40) and a second bypass line (14) connected to an exhaust gas line (11) at an upstream of the SCR reactor (30), according to the determination result;
adjusting a flux of a bypass gas supplied to the urea decomposing device (40) and a flux of a bypass gas discharged to the SCR reactor (30) by adjusting opening degrees of the first bypass line (13) and the second bypass line (14), according to the set distribution ratio; and
determining whether or not to supply an additional gas for cooling the urea decomposing device (40) through a third bypass line (16) having a diverging point (P3) in the exhaust line (11) at an upstream of a joining point (P2) of the second bypass line (14) and having a joining point (P4) in the first bypass line (13) at a downstream of a diverging point (P1) of the second bypass line (14) according to temperature of a heating gas of the urea decomposing device (40) and adjusting a flux thereof.

9. The method for controlling a low-pressure SCR system according to claim 8,
wherein when the temperature of the exhaust gas at the inlet of the SCR reactor (30) is lower than SCR target temperature, the supply of the additional gas for cooling through the third bypass line (16) is blocked, a flux of the bypass gas discharged to the exhaust line (11) through the second bypass line (14) is reduced, and a flux of the bypass gas supplied to the urea decomposing device (40) through the first bypass line (13) is increased.

10. The method for controlling a low-pressure SCR system according to claim 9,
wherein as the flux of the bypass gas supplied to the urea decomposing device (40) through the first bypass line (13) is increased, a volume of fuel flowing into the urea decomposing device (40) is increased correspondingly.

11. The method for controlling a low-pressure SCR system according to claim 8,
wherein when the temperature of the heating gas of the urea decomposing device (40) is higher than urea decomposition target temperature, the third bypass line (16) is opened so that a low-temperature exhaust gas flowing through the turbocharger (20) is supplied as the additional gas for cooling.

12. The method for controlling a low-pressure SCR system according to claim 8,
wherein under the condition that the temperature of the exhaust gas at the inlet of the SCR reactor (30) is lower than SCR target temperature and the distribution ratio is set to block the second bypass line (14) and open the first bypass line (13) so that the high-temperature bypass gas emitting from an engine flows into the urea decomposing device (40) through the first bypass line (13), when the temperature of the heating gas of the urea decomposing device (40) is higher than target temperature, the third bypass line (16) is opened to additionally extract a portion of the low-temperature exhaust gas passing through the exhaust line (11) so that the extracted portion of the low-temperature exhaust gas joins the high-temperature bypass gas entering the urea decomposing device (40) through the first bypass line (13).

## Patentansprüche

1. Niederdruck-SCR-System, umfassend:
einen SCR-Reaktor (30);
eine Abgasleitung (11), die konfiguriert ist, um ein Abgas mit niedriger Temperatur, das durch einen Turbolader (20) strömt, an den SCR-Reaktor (30) zu leiten;
eine Harnstoffzersetzungsvorrichtung (40) mit einer Harnstoffzersetzungskammer (41), die konfiguriert ist, Harnstoff zu zersetzen, um dadurch Ammoniak zu erzeugen, und das erzeugte Ammoniak an den SCR-Reaktor (30) zu leiten;
eine erste Bypassleitung (13), die konfiguriert ist, um einen Teil eines Abgases mit hoher Temperatur zu extrahieren, bevor dieses von einem Motor in den Turbolader (20) strömt, und den Teil des Abgases mit hoher Temperatur an die Harnstoffzersetzungsvorrichtung (40) zu leiten;
eine zweite Bypassleitung (14), die konfiguriert ist, um die erste Bypassleitung (13) mit der Abgasleitung (11) zu verbinden, um das in der ersten Bypassleitung (13) strömende Abgas mit hoher Temperatur an die Abgasleitung (11) zu verteilen, so dass ein Fluss des der Harnstoffzersetzungsvorrichtung (40) durch die erste Bypassleitung (13) zugeführten Bypass-Gases verändert wird; **dadurch gekennzeichnet, dass** das System des Weiteren umfasst:
eine dritte Bypassleitung (16), die konfiguriert ist, um die Abgasleitung (11) mit der ersten Bypassleitung (13) derart zu verbinden, dass sich ein Abzweigungspunkt (P3) in der Abgasleitung (11) stromaufwärts von einem Verbindungspunkt (P2) der zweiten Bypassleitung (14) ergibt und sich ein Verbindungspunkt (P4) in der ersten Bypassleitung (13) stromabwärts von einem Abzweigungspunkt (P1) der zweiten Bypassleitung (14) ergibt, wobei die dritte Bypassleitung (16) einen Teil des in der Abgasleitung (11) durch den Turbolader (20) strömenden Abgases mit niedriger Temperatur entnimmt und diesen Teil des Abgases mit niedriger Temperatur der Harnstoffzersetzungsvorrichtung (40) als zusätzliches Gas zum Kühlen eines Heizgases zur Harnstoffzersetzung zuführt; und
einen Steuerabschnitt (60), der konfiguriert ist, SCR-Betriebsvorgänge insgesamt zu steuern, einschließlich der Steuerung von Strömen in der ersten, zweiten und dritten Bypassleitung (13, 14, 16) gemäß der Temperatur des SCR-Reaktors (30) und der Temperatur des Heizgases der Harnstoffzersetzungsvorrichtung (40).

2. Niederdruck-SCR-System nach Anspruch 1,
bei dem ein Verteilungsverhältnis des Flusses des Bypass-Gases zwischen der ersten Bypassleitung (13) und der zweiten Bypassleitung (14) entsprechend der Temperatur des Abgases an einem Einlass des SCR-Reaktors (30) eingestellt wird.

3. Niederdruck-SCR-System nach Anspruch 2,
bei dem, wenn die Temperatur des Abgases am Eingang des SCR-Reaktors (30) niedriger ist als die SCR-Zieltemperatur, die Zufuhr des zusätzlichen Gases über die dritte Bypassleitung (16) blockiert wird, der Fluss des der Harnstoffzersetzungsvorrichtung (40) über die erste Bypassleitung (13) zugeführten Bypass-Gases erhöht wird und der Fluss des über die zweite Bypassleitung (14) zur Abgasleitung (11) herausströmenden Bypass-Gases verringert wird.

4. Niederdruck-SCR-System nach Anspruch 3,
bei dem mit der Erhöhung des Flusses des der Harnstoffzersetzungsvorrichtung (40) zugeführten Bypass-Gases ein Kraftstoffvolumen, das in die Harnstoffzersetzungsvorrichtung (40) strömt, ebenfalls erhöht wird.

5. Niederdruck-SCR-System nach Anspruch 1,
bei dem die Zuführung des zusätzlichen Gases zum Kühlen der Harnstoffzersetzungsvorrichtung (40) über die dritte Bypassleitung (16) erfolgt, wenn die Temperatur des Heizgases der Harnstoffzersetzungsvorrichtung (40) höher als die Zieltemperatur ist, unter der Bedingung, dass die Temperatur des Abgases am Eingang des SCR-Reaktors (30) niedriger als die SCR-Zieltemperatur ist und ein Verteilungsverhältnis derart eingestellt ist, dass die zweite Bypassleitung (14) blockiert ist, so dass das Bypass-Gas mit hoher Temperatur über die erste Bypassleitung (13) vollständig in die Harnstoffzersetzungsvorrichtung (40) strömt.

6. Niederdruck-SCR-System nach Anspruch 5,
bei dem das zusätzliche Gas zum Kühlen der Harnstoffzersetzungsvorrichtung (40), das über die dritte Bypassleitung (16) zugeführt wird, allmählich erhöht wird, bis die Temperatur des Heizgases der Harnstoffzersetzungsvorrichtung (40) auf die Zieltemperatur abgesenkt ist.

7. Niederdruck-SCR-System nach Anspruch 1, des Weiteren umfassend:
ein Gebläse (50), das an der dritten Bypassleitung (16) installiert ist, mit dem das in der Abgasleitung (11) strömende Abgases hinein getrieben wird; und
ein drittes Bypass-Fluss-Einstellventil (67), das an der dritten Bypassleitung (16) angebracht ist, um einen Fluss des zusätzlichen Gases einzustellen, welches von dem Gebläse (50) an die Harnstoffzersetzungsvorrichtung (40) geleitet wird.

8. Verfahren zum Steuern eines Niederdruck-SCR-Systems, folgendes umfassend:
Bestimmen der Temperatur eines Abgases an einem Einlass eines SCR-Reaktors (30);
Einstellen eines Verteilungsverhältnisses eines Bypass-Gases mit hoher Temperatur, das vor dem Einströmen in einen Turbolader (20) entnommen wird, zwischen einer ersten Bypassleitung (13), die an eine Harnstoffzersetzungsvorrichtung (40) angeschlossen ist, und einer zweiten Bypassleitung (14), die mit einer Abgasleitung (11) stromaufwärts des SCR-Reaktors (30) verbunden ist, gemäß dem Bestimmungsergebnis;
Einstellen eines Flusses eines der Harnstoffzersetzungsvorrichtung (40) zugeführten Bypass-Gases und eines Flusses eines an den SCR-Reaktor (30) abgeführten Bypass-Gases durch Einstellen von Öffnungsgraden der ersten Bypassleitung (13) und der zweiten Bypassleitung (14) gemäß dem eingestellten Verteilungsverhältnis; und
Bestimmen, ob ein zusätzliches Gas zum Kühlen der Harnstoffzersetzungsvorrichtung (40) über eine dritte Bypassleitung (16) zugeführt werden soll oder nicht, welche einen Abzweigungspunkt (P3) in der Abgasleitung (11) stromaufwärts von einem Verbindungspunkt (P2) der zweiten Bypassleitung (14) hat und einen Verbindungspunkt (P4) in der ersten Bypassleitung (13) stromabwärts von einem Abzweigungspunkt (P1) der zweiten Bypassleitung (14) hat, gemäß der Temperatur eines Heizgases der Harnstoffzersetzungsvorrichtung (40), und Einstellen eines Flusses dieses Gases.

9. Verfahren zum Steuern eines Niederdruck-SCR-Systems nach Anspruch 8, bei dem, wenn die Temperatur des Abgases am Eingang des SCR-Reaktors (30) niedriger als die SCR-Ziel¬tempe¬ratur ist, die Zufuhr des zusätzlichen Gases zum Kühlen über die dritte Bypassleitung (16) blockiert wird, ein Fluss des durch die zweite Bypassleitung (14) in die Abgasleitung (11) abgeleiteten Bypass-Gases verringert wird und ein Fluss des der Harnstoffzersetzungsvorrichtung (40) über die erste Bypassleitung (13) zugeführten Bypass-Gases erhöht wird.

10. Verfahren zum Steuern eines Niederdruck-SCR-Systems nach Anspruch 9, bei dem mit Erhöhung des Flusses des der Harnstoffzersetzungsvorrichtung (40) über die erste Bypassleitung (13) zugeführten Bypass-Gases ein in die Harnstoffzersetzungsvorrichtung (40) strömendes Kraftstoffvolumen entsprechend erhöht wird.

11. Verfahren zum Steuern eines Niederdruck-SCR-Systems nach Anspruch 8, bei dem, wenn die Temperatur des Heizgases der Harnstoffzersetzungsvorrichtung (40) höher ist als die Zieltemperatur der Harnstoffzersetzung, die dritte Bypassleitung (16) geöffnet wird, so dass ein durch den Turbolader (20) strömendes Abgas mit niedriger Temperatur als das zusätzliche Gas zum Kühlen zugeführt wird.

12. Verfahren zum Steuern eines Niederdruck-SCR-Systems nach Anspruch 8, bei dem unter der Bedingung, dass die Temperatur des Abgases am Eingang des SCR-Reaktors (30) niedriger als die SCR-Zieltemperatur ist und das Verteilungsverhältnis derart eingestellt ist, dass die zweite Bypassleitung (14) blockiert und die erste Bypassleitung (13) geöffnet ist, so dass das von einem Motor ausgestoßene Bypass-Gas mit hoher Temperatur über die erste Bypassleitung (13) in die Harnstoffzersetzungsvorrichtung (40) strömt, wenn die Temperatur des Heizgases der Harnstoffzersetzungsvorrichtung (40) höher als die Zieltemperatur ist, die dritte Bypassleitung (16) geöffnet wird, um zusätzlich einen Teil des durch die Abgasleitung (11) strömenden Abgases mit niedriger Temperatur zu extrahieren, so dass sich der extrahierte Teil des Abgases mit niedriger Temperatur mit dem Bypass-Gas mit hoher Temperatur verbindet, welches über die erste Bypassleitung (13) in die Harnstoffzersetzungsvorrichtung (40) einfließt.

## Revendications

1. Système de réduction catalytique sélective (SCR) à basse pression, comprenant :
un réacteur SCR (30) ;
une conduite d'échappement (11) configurée pour guider un gaz d'échappement à basse température passant à travers un turbocompresseur (20) vers le réacteur SCR (30) ;
un dispositif de décomposition d'urée (40) ayant une chambre de décomposition d'urée (41) et configuré pour décomposer de l'urée afin de générer de l'ammoniac et d'envoyer l'ammoniac généré au réacteur SCR (30) ;
une première conduite de dérivation (13) configurée pour extraire une partie d'un gaz d'échappement à température élevée avant qu'il ne s'écoule d'un moteur dans le turbocompresseur (20) et guider la partie du gaz d'échappement à température élevée vers le dispositif de décomposition d'urée (40) ;
une deuxième conduite de dérivation (14) configurée pour raccorder la première conduite de dérivation (13) et la conduite d'échappement (11) afin de distribuer le gaz d'échappement à température élevée s'écoulant dans la première conduite de dérivation (13) dans la conduite d'échappement (11) de sorte qu'un flux du gaz de dérivation fourni au dispositif de décomposition d'urée (40) à travers la première conduite de dérivation (13) soit modifié ;
**caractérisé en ce que** le système comprend en outre :
une troisième conduite de dérivation (16) configurée pour raccorder la conduite d'échappement (11) et la première conduite de dérivation (13) afin d'avoir un point divergent (P3) dans la conduite d'échappement (11) en amont d'un point de jonction (P2) de la deuxième conduite de dérivation (14) et d'avoir un point de jonction (P4) dans la première conduite de dérivation (13) en aval d'un point divergent (P1) de la deuxième conduite de dérivation (14), la troisième conduite de dérivation (16) extrayant une partie du gaz d'échappement à basse température s'écoulant dans la conduite d'échappement (11) à travers le turbocompresseur (20) et fournissant la partie du gaz d'échappement à basse température au dispositif de décomposition d'urée (40) comme gaz supplémentaire pour refroidir un gaz de chauffage pour la décomposition de l'urée ; et
une partie de commande (60) configurée pour commander des opérations SCR globales, notamment la commande des flux dans la première, la deuxième et la troisième conduite de dérivation (13, 14, 16) selon la température du réacteur SCR (30) et la température du gaz de chauffage du dispositif de décomposition d'urée (40).

2. Système SCR à basse pression selon la revendication 1,
dans lequel un taux de distribution du flux du gaz de dérivation entre la première conduite de dérivation (13) et la deuxième conduite de dérivation (14) est réglé selon la température du gaz d'échappement à une entrée du réacteur SCR (30).

3. Système SCR à basse pression selon la revendication 2,
dans lequel, lorsque la température du gaz d'échappement à l'entrée du réacteur SCR (30) est inférieure à la température SCR cible, la fourniture du gaz supplémentaire à travers la troisième conduite de dérivation (16) est bloquée, le flux du gaz de dérivation fourni au dispositif de décomposition d'urée (40) à travers la première conduite de dérivation (13) est augmenté et le flux du gaz de dérivation s'écoulant dans la conduite d'échappement (11) à travers la deuxième conduite de dérivation (14) est réduit.

4. Système SCR à basse pression selon la revendication 3,
dans lequel, à mesure que le flux du gaz de dérivation fourni au dispositif de décomposition d'urée (40) augmente, un volume de combustible s'écoulant dans le dispositif de décomposition d'urée (40) augmente également.

5. Système SCR à basse pression selon la revendication 1,
dans lequel le gaz supplémentaire pour refroidir le dispositif de décomposition d'urée (40) est fourni à travers la troisième conduite de dérivation (16) lorsque la température du gaz de chauffage du dispositif de décomposition d'urée (40) est supérieure à la température cible, à condition que la température du gaz d'échappement à l'entrée du réacteur SCR (30) soit inférieure à la température SCR cible et qu'un rapport de distribution soit réglé pour bloquer la deuxième conduite de dérivation (14) de sorte que le gaz de dérivation à température élevée s'écoule entièrement dans le dispositif de décomposition d'urée (40) à travers la première conduite de dérivation (13).

6. Système SCR à basse pression selon la revendication 5,
dans lequel le gaz supplémentaire pour refroidir le dispositif de décomposition d'urée (40), fourni à travers la troisième conduite de dérivation (16), est graduellement augmenté jusqu'à ce que la température du gaz de chauffage du dispositif de décomposition d'urée (40) soit abaissée à la température cible.

7. Système SCR à basse pression selon la revendication 1, comprenant en outre :
une soufflerie (50) installée dans la troisième conduite de dérivation (16) pour ajouter à force le gaz d'échappement s'écoulant dans la conduite d'échappement (11) ; et
une soupape de réglage de troisième flux de dérivation (67) installée dans la troisième conduite de dérivation (16) pour ajuster un flux du gaz supplémentaire envoyé au dispositif de décomposition d'urée (40) par la soufflerie (50).

8. Procédé de commande d'un système SCR à basse pression, comprenant :
la détermination de la température d'un gaz d'échappement à une entrée d'un réacteur SCR (30) ;
le réglage d'un taux de distribution d'un gaz de dérivation à température élevée, extrait avant qu'il ne s'écoule dans un turbocompresseur (20), entre une première conduite de dérivation (13) raccordée à un dispositif de décomposition d'urée (40) et une deuxième conduite de dérivation (14) raccordée à une conduite de gaz d'échappement (11) en amont du réacteur SCR (30) en fonction du résultat de la détermination ;
l'ajustement d'un flux d'un gaz de dérivation fourni au dispositif de décomposition d'urée (40) et d'un flux d'un gaz de dérivation déchargé dans le réacteur SCR (30) en ajustant les degrés d'ouverture de la première conduite de dérivation (13) et de la deuxième conduite de dérivation (14), en fonction du rapport de distribution réglé ; et
la détermination du fait qu'il faille ou non fournir un gaz supplémentaire pour refroidir le dispositif de décomposition d'urée (40) à travers une troisième conduite de dérivation (16) ayant un point divergent (P3) dans la conduite d'échappement (11) en amont d'un point de jonction (P2) de la deuxième conduite de dérivation (14) et ayant un point de jonction (P4) dans la première conduite de dérivation (13) en aval d'un point divergent (P1) de la deuxième conduite de dérivation (14) selon la température d'un gaz de chauffage du dispositif de décomposition d'urée (40) et de l'ajustement de son flux.

9. Procédé de commande d'un système SCR à basse pression selon la revendication 8,
dans lequel, lorsque la température du gaz d'échappement à l'entrée du réacteur SCR (30) est inférieure à la température SCR cible, la fourniture du gaz supplémentaire pour refroidir à travers la troisième conduite de dérivation (16) est bloquée, un flux du gaz de dérivation déchargé dans la conduite d'échappement (11) à travers la deuxième conduite de dérivation (14) est réduit et un flux du gaz de dérivation fourni au dispositif de décomposition d'urée (40) à travers la première conduite de dérivation (13) est augmenté.

10. Procédé de commande d'un système SCR à basse pression selon la revendication 9,
dans lequel, à mesure que le flux du gaz de dérivation fourni au dispositif de décomposition d'urée (40) à travers la première conduite de dérivation (13) augmente, un volume de combustible s'écoulant dans le dispositif de décomposition d'urée (40) augmente de manière correspondante.

11. Procédé de commande d'un système SCR à basse pression selon la revendication 8,
dans lequel, lorsque la température du gaz de chauffage du dispositif de décomposition d'urée (40) est supérieure à la température cible de décomposition d'urée, la troisième conduite de dérivation (16) est ouverte de sorte qu'un gaz d'échappement à basse température s'écoulant à travers le turbocompresseur (20) soit fourni comme gaz supplémentaire pour le refroidissement.

12. Procédé de commande d'un système SCR à basse pression selon la revendication 8,
dans lequel, à condition que la température du gaz d'échappement à l'entrée du réacteur SCR (30) soit inférieure à la température SCR cible et que le taux de distribution soit réglé pour bloquer la deuxième conduite de dérivation (14) et ouvrir la première conduite de dérivation (13) de sorte que le gaz de dérivation à température élevée émis par un moteur s'écoule dans le dispositif de décomposition d'urée (40) à travers la première conduite de dérivation (13), lorsque la température du gaz de chauffage du dispositif de décomposition d'urée (40) est supérieure à la température cible, la troisième conduite de dérivation (16) est ouverte pour extraire en plus une partie du gaz d'échappement à basse température passant à travers la conduite d'échappement (11) de sorte que la partie extraite du gaz d'échappement à basse température rejoigne le gaz de dérivation à température élevée entrant dans le dispositif de décomposition d'urée (40) à travers la première conduite de dérivation (13).
